# DEMANDE DE BREVET EUROPEEN

(11) **EP 2 952 977 A1**
(43) Date de publication de la demande: **09.12.2015**
(21) Numéro de dépôt: 14171018.6
(22) Date de dépôt: 03.06.2014
(51) Int. Cl.: G04D 3/00, G04B 1/14, G04B 31/004

(54) **Composant horloger en matériaux soudés**

(71) Demandeur: Nivarox-FAR S.A., 2400 Le Locle (CH)
(72) Inventeur: Cusin, Pierre, 1423 Villars-Burquin (CH); Bazin, Jean-Luc, 74500 Publier (FR)
(74) Mandataire: Couillard, Yann Luc Raymond

(57) **Abrégé**

Composant horloger (21) comportant une première pièce (1, 2, 3, 4, 5, 6, 7, 8, 9, 10, 11, 12, 13, 14, 15, 16, 17, 18, 19, 20, 22, 25, 27) à base de silicium, une deuxième pièce (1, 2, 3, 4, 5, 6, 7, 8, 9, 10, 11, 12, 13, 14, 15, 16, 17, 18, 19, 20, 22, 25, 27) à base de métal. Une surface (24, 28, 30, 31) de la première pièce est soudée par rayonnement électromagnétique sur une surface de la deuxième pièce afin de les solidariser.

## Description

### Domaine de l'invention

L'invention se rapporte à un composant horloger en matériaux soudés et notamment un tel composant comportant un matériau à base de silicium ou de céramique.

### Arrière-plan de l'invention

Les assemblages actuels comportant une pièce à base de silicium sont généralement solidarisés par collage. Une telle opération nécessite une extrême finesse d'application ce qui la rend coûteuse.

Il a également été développé des pièces à base de silicium comportant des zones de déformation élastique afin de pouvoir les assembler. Toutefois, suivant l'application, le collage peut parfois toujours être rendu nécessaire pour maintenir une force d'assemblage suffisante.

Enfin, il a également été développé des parties intermédiaires aptes à se déformer plastiquement destinées à être chassées tout en protégeant la pièce à base de silicium. Toutefois, elles ne donnent pas toujours satisfaction car, suivant les applications, elles peuvent être difficiles à mettre en oeuvre.

### Résumé de l'invention

Le but de la présente invention est de pallier tout ou partie les inconvénients cités précédemment en proposant un composant horloger formé à partir d'une pièce comportant un matériau à base de silicium ou de céramique qui est directement soudé par rayonnement électromagnétique sur une autre pièce comme, par exemple, un métal ou un alliage métallique.

A cet effet, selon un premier mode de réalisation, l'invention se rapporte à un composant horloger comportant une première pièce à base de silicium, une deuxième pièce à base de métal caractérisé en ce qu'une surface de la première pièce est soudée par rayonnement électromagnétique sur une surface de la deuxième pièce afin de les solidariser.

Selon l'invention, la première pièce à base de silicium comporte du silicium monocristallin, du silicium monocristallin dopé, du silicium polycristallin, du silicium polycristallin dopé, du silicium poreux, de l'oxyde de silicium, du quartz, de la silice, du nitrure de silicium ou du carbure de silicium.

Selon un deuxième mode de réalisation, l'invention se rapporte à un composant horloger, comportant une première pièce à base de céramique, une deuxième pièce à base de métal caractérisé en ce qu'une surface de la première pièce est soudée par rayonnement électromagnétique sur une surface de la deuxième pièce afin de les solidariser.

Selon l'invention, la première pièce à base de céramique comporte du verre photostructurable, du borosilicate, de l'aluminosilicate, du verre de quartz, du zérodur, du corindon monocristallin, du corindon polycristallin, de l'alumine, de l'oxyde d'aluminium, du nitrure d'aluminium, du rubis monocristallin, du rubis polycristallin, de l'oxyde de zirconium, de l'oxyde de titane, du nitrure de titane, du carbure de titane, du nitrure de tungstène, du carbure de tungstène, du nitrure de bore ou du carbure de bore.

Avantageusement selon les deux modes de réalisation de l'invention, on comprend qu'il n'est pas nécessaire d'apporter de la matière pour solidariser les deux matériaux. De plus, les pièces déjà développées peuvent être utilisées et désormais soudées avec une meilleure adhérence et une garantie de tenue dans le temps plus élevé qu'avec le collage. Enfin, le soudage direct des surfaces rend sensiblement invisible la solidarisation.

Conformément à d'autres variantes avantageuses des deux modes de réalisation de l'invention :
- la première pièce à base de silicium ou de céramique comporte en outre au moins un revêtement partiel d'oxyde de silicium, de nitrure de silicium, de carbure de silicium ou d'un allotrope du carbone ;
- l'une des première et deuxième pièces est opaque à la longueur d'onde dudit rayonnement électromagnétique afin de souder lesdites surfaces des première et deuxième pièces lorsqu'elles sont l'une contre l'autre ;
- les première et deuxième pièces sont transparentes à la longueur d'onde dudit rayonnement électromagnétique, un matériau intermédiaire étant déposé à l'interface des première et deuxième pièces afin de souder lesdites surfaces des première et deuxième pièces ;
- la première pièce et/ou la deuxième pièce forme un spiral, une cheville, un balancier, un axe, un plateau, une ancre, une tige, une baguette, une fourchette, une palette, un dard, un mobile, une roue, un arbre, un pignon, un pont, une platine, une masse oscillante, une tige de remontoir, un palier ou un coussinet ;
- la deuxième pièce comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

Enfin, l'invention se rapporte à une pièce d'horlogerie caractérisée en ce qu'elle comporte un composant horloger selon l'une des variantes précédentes.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation en perspective de composants horlogers selon la présente invention ;
- la figure 2 est une vue en coupe d'un composant horloger selon l'invention.

### Description détaillée des modes de réalisation préférés

Comme expliqué ci-dessus, l'invention se rapporte à un composant formé à l'aide d'une pièce dont le matériau ne comporte pas de domaine plastique utilisable, c'est-à-dire avec un domaine plastique très restreint, avec une deuxième pièce comportant le même type de matériau ou un autre type de matériau.

Ce composant a été imaginé pour des applications dans le domaine horloger et est rendu nécessaire par la part croissante que tiennent les matériaux fragiles comme ceux à base de silicium ou de céramique. On peut, à titre d'exemple, envisager de former le spiral, le balancier, l'ancre, les ponts, la masse oscillante ou même les mobiles comme les roues d'échappement totalement ou partiellement à base de matériaux fragiles.

Toutefois, le fait de toujours pouvoir utiliser des pièces habituelles comme, par exemple, les axes en acier dont la fabrication est maîtrisée, est une contrainte qui est difficile à concilier avec l'utilisation de pièces ne comportant pas de domaine plastique. En effet, lors de tests effectués, le chassage d'un axe en acier est impossible et brise systématiquement les pièces fragiles, c'est-à-dire ne comportant pas de domaine plastique utilisable. Par exemple, il est apparu que le cisaillement généré par l'entrée de l'axe métallique dans l'ouverture d'une pièce en silicium monocristallin revêtue de dioxyde de silicium brise systématique cette dernière.

C'est pourquoi, selon un premier mode de réalisation, l'invention se rapporte à un composant horloger comportant une première pièce à base de silicium, une deuxième pièce à base de métal caractérisé en ce qu'une surface de la première pièce est soudée par rayonnement électromagnétique sur une surface de la deuxième pièce afin de les solidariser.

Avantageusement selon l'invention, on comprend qu'il n'est pas obligatoire d'apporter de la matière pour solidariser les deux pièces comme pour le collage ou l'utilisation d'une partie intermédiaire. Il n'est pas non plus nécessaire de former des structures particulières dans la première pièce pour pouvoir l'assembler dans la deuxième pièce. Ainsi, à titre d'exemple, un simple trou permettant de coopérer avec un axe de section correspondante est suffisant, le trou étant formé dans la première pièce ou dans la deuxième pièce.

On comprend donc que les pièces déjà développées peuvent être utilisées et désormais soudés par rayonnement électromagnétique avec une meilleure adhérence et une garantie de tenue dans le temps plus élevé qu'avec un collage. Enfin, le soudage direct des surfaces rend sensiblement invisible la solidarisation. En effet, il suffit que l'une des première et deuxième pièces soit opaque et, une autre, transparente à la longueur d'onde dudit rayonnement électromagnétique pour souder lesdites surfaces des première et deuxième pièces lorsqu'elles sont l'une contre l'autre. Un tel soudage par rayonnement électromagnétique est, par exemple, expliqué dans le document EP 1 436 830 incorporé par référence dans la présente description. De plus, comme expliqué dans le document EP 1 436 830, si les première et deuxième pièces sont transparentes à la longueur d'onde dudit rayonnement électromagnétique, de manière optionnelle, un matériau intermédiaire destiné à favoriser la solidarisation entre les deux matériaux peut être utilisé. Ainsi, ce matériau intermédiaire forme une couche destinée à induire un échauffement suffisamment intense pour générer la fusion des deux matériaux.

Selon le premier mode de réalisation, la première pièce à base de silicium comporte, de manière préférée, du silicium monocristallin, du silicium monocristallin dopé, du silicium polycristallin, du silicium polycristallin dopé, du silicium poreux, de l'oxyde de silicium, du quartz, de la silice, du nitrure de silicium ou du carbure de silicium. De plus, la première pièce à base de silicium peut en outre comporter optionnellement au moins un revêtement partiel d'oxyde de silicium, de nitrure de silicium, de carbure de silicium ou d'un allotrope du carbone suivant les applications prévues du composant horloger.

Selon un deuxième mode de réalisation, l'invention se rapporte à un composant horloger comportant une première pièce à base de céramique, une deuxième pièce à base de métal caractérisé en ce qu'une surface de la première pièce est soudée par rayonnement électromagnétique sur une surface de la deuxième pièce afin de les solidariser.

Avantageusement selon l'invention, on comprend qu'il n'est pas obligatoire d'apporter de la matière pour solidariser les deux pièces comme pour le collage ou l'utilisation d'une partie intermédiaire. Il n'est pas non plus nécessaire de former des structures particulières dans la première pièce pour pouvoir l'assembler dans la deuxième pièce. Ainsi, à titre d'exemple, un simple trou permettant de coopérer avec un axe de section correspondante est suffisant, le trou étant formé dans la première pièce ou dans la deuxième pièce.

On comprend donc que les pièces déjà développées peuvent être utilisées et désormais soudés par rayonnement électromagnétique avec une meilleure adhérence et une garantie de tenue dans le temps plus élevé qu'avec un collage. Enfin, le soudage direct des surfaces rend sensiblement invisible la solidarisation. En effet, il suffit que l'une des première et deuxième pièces soit opaque et, une autre, transparente à la longueur d'onde dudit rayonnement électromagnétique pour souder lesdites surfaces des première et deuxième pièces lorsqu'elles sont l'une contre l'autre. Un tel soudage par rayonnement électromagnétique est, par exemple, expliqué dans le document EP 1 436 830 incorporé par référence dans la présente description. De plus, comme expliqué dans le document EP 1 436 830, si les première et deuxième pièces sont transparentes à la longueur d'onde dudit rayonnement électromagnétique, de manière optionnelle, un matériau intermédiaire destiné à favoriser la solidarisation entre les deux matériaux peut être utilisé. Ainsi, ce matériau intermédiaire forme une couche destinée à induire un échauffement suffisamment intense pour générer la fusion des deux matériaux.

Selon le deuxième mode de réalisation, la première pièce à base de céramique comporte du verre photostructurable, du borosilicate, de l'aluminosilicate, du verre de quartz, du zérodur, du corindon monocristallin, du corindon polycristallin, de l'alumine, de l'oxyde d'aluminium, du nitrure d'aluminium, du rubis monocristallin, du rubis polycristallin, de l'oxyde de zirconium, de l'oxyde de titane, du nitrure de titane, du carbure de titane, du nitrure de tungstène, du carbure de tungstène, du nitrure de bore ou du carbure de bore. De plus, la première pièce à base de céramique peut en outre comporter optionnellement au moins un revêtement partiel d'oxyde de silicium, de nitrure de silicium, de carbure de silicium ou d'un allotrope du carbone suivant les applications prévues du composant horloger.

Selon les deux modes de réalisation, la deuxième pièce comporte préférentiellement un alliage de fer comme de l'acier 15P, 20AP ou 316L, un alliage de cuivre comme du laiton, un alliage de nickel comme du maillechort, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

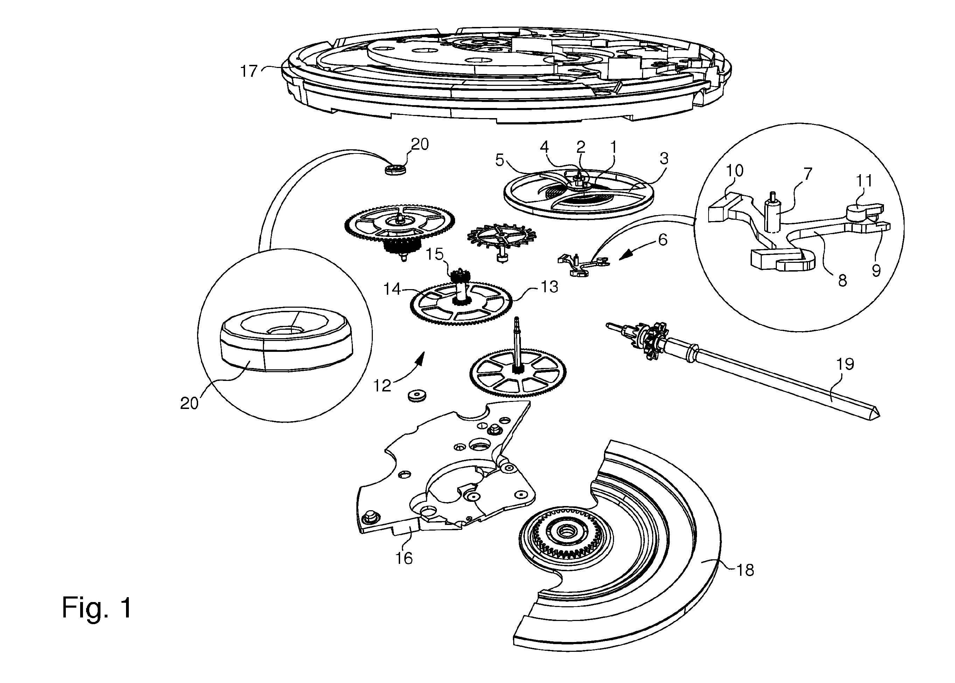

Selon les deux modes de réalisation de l'invention, la première pièce et/ou la deuxième pièce peuvent former une grande variété de composants horlogers pour une pièce d'horlogerie. A titre d'exemples nullement limitatifs et en relation avec la figure 1, la première pièce et/ou la deuxième pièce peuvent ainsi former notamment un spiral 1, une cheville 2, un balancier 3, un axe 4, un plateau 5, une ancre 6 comme une tige 7, une baguette 8, une fourchette 9, une palette 10 et un dard 11, un mobile 12 comme une roue 13, un arbre 14 et un pignon 15, un pont 16, une platine 17, une masse oscillante 18, une tige de remontoir 19 ou un coussinet 20.

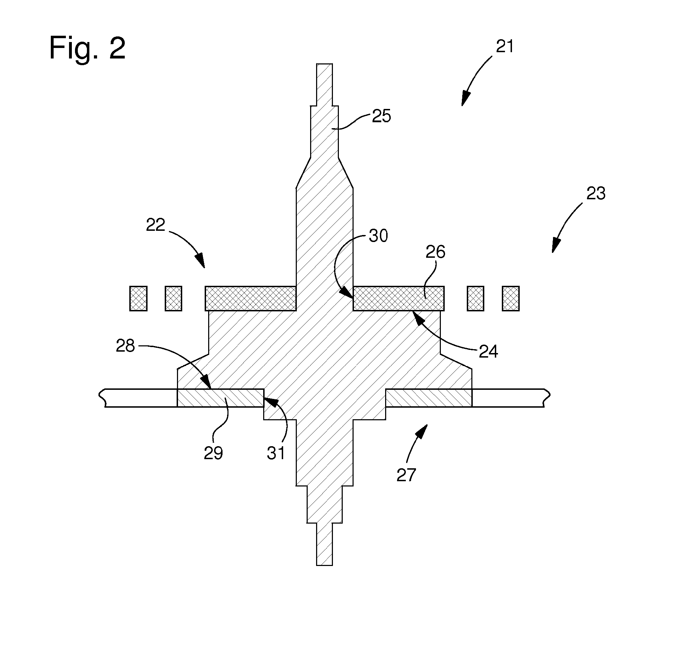

A titre d'exemple, la figure 2 présente un composant horloger 21 formant un résonateur 23 balancier - spiral monté rotatif sur un axe 25. Le spiral 22 comporte une lame s'étendant selon plusieurs spires et est monté sur une première portée 24 de l'axe 25 au moyen d'une virole 26. Le balancier 27 est monté sur une deuxième portée 28 de l'axe 25 au moyen d'un moyeu 29.

On comprend donc, par exemple, que l'axe 25 peut directement être soudé par rayonnement électromagnétique tel qu'un laser au niveau de ses portées 24, 28 et/ou ses surfaces cylindriques 30, 31 contre respectivement le spiral 22 et/ou le balancier 27. Il suffit que, soit l'axe 25, soit le spiral 22 et/ou le balancier 27, soit transparent à la longueur d'onde dudit rayonnement électromagnétique pour souder les surfaces en contact. Bien entendu, d'autres types de surface de contact peuvent être prévus comme des surfaces en pente ou des surfaces non rectilignes.

La présente invention ne se limite pas à l'exemple illustré mais est susceptible de diverses variantes et modifications qui apparaîtront à l'homme de l'art. En particulier, la deuxième pièce peut être d'un autre type de matériau qu'un métal ou un alliage métallique. Ainsi, de manière non limitative, la deuxième pièce peut également être en un même matériau que la première pièce, en céramique ou en un matériau semi-conducteur.

Toutefois, dans ce cas, comme expliqué dans le document EP 1 436 830, si les première et deuxième pièces sont transparentes à la longueur d'onde dudit rayonnement électromagnétique, de manière optionnelle, un matériau intermédiaire destiné à favoriser la solidarisation entre les deux matériaux, doit être utilisé. En effet, ce matériau intermédiaire formerait alors une couche destinée à induire un échauffement suffisamment intense pour générer la fusion des deux matériaux transparents à la longueur d'onde dudit rayonnement électromagnétique.

Comme expliqué ci-dessus, la première pièce et/ou la deuxième pièce peuvent former une variété de composants horlogers. A titre d'exemples additionnels à la figure 2, une ancre 6 pourrait être formé à partir d'une première pièce formant la baguette 8, les palettes 10 et la fourchette 9 et d'une première deuxième pièce formant la tige 7 et d'une seconde deuxième pièce formant le dard 11. Un mobile 12 pourrait être formé à partir d'une première pièce formant un arbre 14 et un pignon 15 et d'une deuxième pièce formant une roue 13. Un ensemble résonateur pourrait être formé à partir d'une première pièce formant un boîtier muni d'une cavité, d'une première deuxième pièce formant un résonateur diapason et d'une seconde deuxième pièce formant le couvercle enfermant le résonateur dans le boîtier.

De plus, une première pièce pourrait former un plateau 5 et être solidaire d'une deuxième pièce formant une cheville 2, une première pièce pourrait former une platine 17 ou un pont 16 et être solidaire de plusieurs deuxièmes pièces formant des coussinets 20 ou une première pièce pourrait former une masse oscillante 18 et être solidaire d'une deuxième pièce formant une cage de roulement.

Enfin, ledit au moins un revêtement partiel optionnel se saurait se limiter à de l'oxyde de silicium, de nitrure de silicium, du carbure de silicium ou un allotrope du carbone. Ainsi, suivant les applications prévues du composant horloger, d'autres matériaux peuvent être envisagés pour, par exemple, améliorer les qualités tribologiques, thermiques ou visuelles du composant horloger. A titre d'exemple, au moins un revêtement partiel de compensation thermique peut être déposé.

## Revendications

1. Composant horloger (21) comportant une première pièce (1, 2, 3, 4, 5, 6, 7, 8, 9, 10, 11, 12, 13, 14, 15, 16, 17, 18, 19, 20, 22, 25, 27) à base de silicium, une deuxième pièce (1, 2, 3, 4, 5, 6, 7, 8, 9, 10, 11, 12, 13, 14, 15, 16, 17, 18, 19, 20, 22, 25, 27) à base de métal **caractérisé en ce qu'**une surface (24, 28, 30, 31) de la première pièce est soudée par rayonnement électromagnétique sur une surface de la deuxième pièce afin de les solidariser.

2. Composant horloger (21) selon la revendication précédente, **caractérisé en ce que** la première pièce à base de silicium comporte du silicium monocristallin, du silicium monocristallin dopé, du silicium polycristallin, du silicium polycristallin dopé, du silicium poreux, de l'oxyde de silicium, du quartz, de la silice, du nitrure de silicium ou du carbure de silicium.

3. Composant horloger (21) selon la revendication précédente, **caractérisé en ce que** la première pièce à base de silicium comporte en outre au moins un revêtement partiel d'oxyde de silicium, de nitrure de silicium, de carbure de silicium ou d'un allotrope du carbone.

4. Composant horloger (21) comportant une première pièce (1, 2, 3, 4, 5, 6, 7, 8, 9, 10, 11, 12, 13, 14, 15, 16, 17, 18, 19, 20, 22, 25, 27) à base de céramique, une deuxième pièce (1, 2, 3, 4, 5, 6, 7, 8, 9, 10, 11, 12, 13, 14, 15, 16, 17, 18, 19, 20, 22, 25, 27) à base de métal **caractérisé en ce qu'**une surface (24, 28, 30, 31) de la première pièce est soudée par rayonnement électromagnétique sur une surface de la deuxième pièce afin de les solidariser.

5. Composant horloger (21) selon la revendication précédente, **caractérisé en ce que** la première pièce à base de céramique comporte du verre photostructurable, du borosilicate, de l'aluminosilicate, du verre de quartz, du zérodur, du corindon monocristallin, du corindon polycristallin, de l'alumine, de l'oxyde d'aluminium, du nitrure d'aluminium, du rubis monocristallin, du rubis polycristallin, de l'oxyde de zirconium, de l'oxyde de titane, du nitrure de titane, du carbure de titane, du nitrure de tungstène, du carbure de tungstène, du nitrure de bore ou du carbure de bore.

6. Composant horloger (21) selon la revendication précédente, **caractérisé en ce que** la première pièce à base de céramique comporte en outre au moins un revêtement partiel d'oxyde de silicium, de nitrure de silicium, de carbure de silicium ou d'un allotrope du carbone.

7. Composant horloger (21) selon l'une des revendications précédentes, **caractérisé en ce que** l'une des première et deuxième pièces (1, 2, 3, 4, 5, 6, 7, 8, 9, 10, 11, 12, 13, 14, 15, 16, 17, 18, 19, 20, 22, 25, 27) est opaque à la longueur d'onde dudit rayonnement électromagnétique afin de souder lesdites surfaces des première et deuxième pièces lorsqu'elles sont l'une contre l'autre.

8. Composant horloger (21) selon l'une des revendications 1 à 6, **caractérisé en ce que** les première et deuxième pièces (1, 2, 3, 4, 5, 6, 7, 8, 9, 10, 11, 12, 13, 14, 15, 16, 17, 18, 19, 20, 22, 25, 27) sont transparentes à la longueur d'onde dudit rayonnement électromagnétique, un matériau intermédiaire étant déposé à l'interface des première et deuxième pièces afin de souder lesdites surfaces des première et deuxième pièces.

9. Composant horloger (21) selon l'une des revendications précédentes, **caractérisé en ce que** la première pièce et/ou la deuxième pièce forme un spiral (1, 22), une cheville (2), un balancier (3, 27), un axe (4, 25), un plateau (5), une ancre (6), une tige (7), une baguette (8), une fourchette (9), une palette (10), un dard (11), un mobile (12), une roue (13), un arbre (14), un pignon (15), un pont (16), une platine (17), une masse oscillante (18), une tige de remontoir (19), un palier ou un coussinet (20).

10. Composant horloger (21) selon l'une des revendications précédentes, **caractérisé en ce que** la deuxième pièce comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

11. Pièce d'horlogerie **caractérisée en ce qu'**elle comporte un composant horloger (21) selon l'une des revendications précédentes.
